# EUROPÄISCHE PATENTSCHRIFT

(11) **EP 0 577 235 B1**
(45) Veröffentlichungstag und Bekanntmachung des Hinweises auf die Patenterteilung: **13.12.1995**
(21) Anmeldenummer: 93250155.4
(22) Anmeldetag: 03.06.1993
(51) Int. Cl.: B60J 5/04, B60R 21/02

(54) **Hohlprofil für die Verstärkung einer Kraftfahrzeugtür**
Hollow profile for reinforcing motor vehicle doors
Profilé creux pour le renforcement des portières de véhicule

(30) Priorität: 30.06.1992 DE 9208957 U
(43) Veröffentlichungstag der Anmeldung: 05.01.1994
(73) Patentinhaber: MANNESMANN Aktiengesellschaft, 40027 Düsseldorf (DE)
(72) Erfinder: Hoffmann, Ulrich, W-4100 Duisburg (DE); Hüls, Friedrich, W-4330 Mülheim/Ruhr (DE)
(74) Vertreter: Meissner, Peter E., Dipl.-Ing.

(56) Entgegenhaltungen:
- US-A- 4 838 606
- US-A- 4 948 196
- US-A- 5 026 111

## Beschreibung

Die Erfindung betrifft ein Verstärkungsprofil für die Verstärkung einer Kraftfahrzeugtür gemäß dem Gattungsbegriff des Hauptanspruches.
Ein solches Verstärkungsprofil ist schon aus US-A-4 948 196 oder US-A-4 838 606 bekannt.

Türverstärker dienen zur Sicherung des Fahrgastraumes eines Personenkraftwagens, indem sie die gesamte Türkonstruktion versteifen und einen erheblichen Anteil an Verformungsarbeit aufnehmen. Die Befestigung des Türverstärkers auf der Innenseite der Fahrzeugtür erfolgt mit verschiedenen Techniken. Eine der üblichen Verfahren ist die Umformung der Rohr- bzw. Profilenden und die Anbringung einer Bohrung im umgeformten Bereich (siehe Prospekt MW "Türverstärkerrohre aus hochfestem feinkörnigen Stahl für die Automobilindustrie", Ausgabe 1988). In diesem Fall wird das Türverstärkerprofil unmittelbar mit üblichen Befestigungselementen wie Schrauben oder Nieten an der Tür befestigt. Eine andere Möglichkeit besteht darin, ein Halteblech an beide Rohr- bzw. Profilenden anzuschweißen und diese mittels Widerstandsschweißen mit der Tür zu verbinden (siehe, zum Beispiel, US-A-4 948 196 oder US-A-4 838 606).

Das letztgenannte Verfahren ist recht aufwendig und hat den Nachteil, daß die Verbindung Tür-Profil im Hinblick auf die gewünschte Steifigkeit nicht optimal ist. Für die an den Enden geschlossenen Türverstärkerprofile ist weiterhin nachteilig, daß die innere Oberfläche der Profile nur schwer oder gar nicht oberflächenbehandelt werden kann.

Aufgabe der Erfindung ist es, ein verbessertes Verstärkungsprofil für die Verstärkung einer Kraftfahrzeugtür anzugeben, das kostengünstig mit der Tür verbindbar ist und dessen innere Oberfläche in einfacher Weise behandelt werden kann.

Diese Aufgabe wird mit den im kennzeichnenden Teil des Hauptanspruches angegebenen Merkmalen gelöst. Vorteilhafte Weiterbildungen sind Bestandteil von Unteransprüchen.

Wesentliches Merkmal des verbesserten Hohlprofiles ist die doppelwandige Verstärkung im Befestigungsbereich, die sich senkrecht zur Belastungsrichtung erstreckt. An diesen Verstärkungsbereich schließt sich in der gleichen Richtung, d. h. senkrecht zur Belastungsrichtung ein etwa rohrförmiger Bereich an, der in Längsrichtung gesehen an beiden Enden offen ist. Das Profil, das sich in dieser Form über die ganze Länge erstreckt, kann im Verstärkungsbereich unmittelbar an der Tür befestigt werden, sei es durch Schweißen oder durch Schrauben oder durch Nieten. Je nach Anordnung einer oder mehrerer doppelwandiger Verstärkungsbereiche in Verbindung mit einem oder mehreren rohrförmigen Bereichen ergeben sich die unterschiedlichsten Varianten dieses erfindungsgemäßen Hohlprofiles. Eine besonders innige Verbindung zur Tür wird dann erreicht, wenn die Kontur in Längsrichtung des Profiles dem Konturverlauf der Tür angepaßt ist.

Das vorgeschlagene Profil hat den Vorteil, daß der notwendige seitliche Bauraum gering und eine Umformung des Profiles an den Enden nicht erforderlich ist. Außerdem kann das an den beiden Enden offene Profil in einfacher Weise oberflächenbehandelt werden. Beispielsweise können die Profile in kurzer Taktzeit gebeizt, grundiert und anschließend lackiert werden. Das ist im Hinblick für einen langfristigen Rostschutz von Bedeutung, da im Zwischenraum der Kraftfahrzeugtür immer Feuchtigkeit vorhanden ist.

In der Zeichnung wird anhand einiger Ausführungsbeispiele das erfindungsgemäße Hohlprofil näher erläutert.
Es zeigen:
- Fig.1: einen Querschnitt durch eine erste Ausführungsform des erfindungsgemäßen Hohlprofiles mit einem verstärkten und einem rohrförmigen Bereich
- Fig. 2-3: einen Querschnitt durch zwei weitere Ausführungsformen mit einem verstärkten Bereich und zwei rohrförmigen Bereichen
- Fig. 4-6: einen Querschnitt durch drei weitere Ausführungsformen mit zwei verstärkten Bereichen und einem rohrförmigen Bereich
- Fig. 7-8: einen Querschnitt durch zwei weitere Ausführungsformen mit zwei verstärkten und drei rohrförmigen Bereich
- Fig. 9: einen Querschnitt durch eine Ausführungsform mit drei verstärkten Bereichen und zwei rohrförmigen Bereichen.
- Fig. 10: ähnlich Fig. 3 mit einem einen Abstand aufweisenden verstärkten Bereich

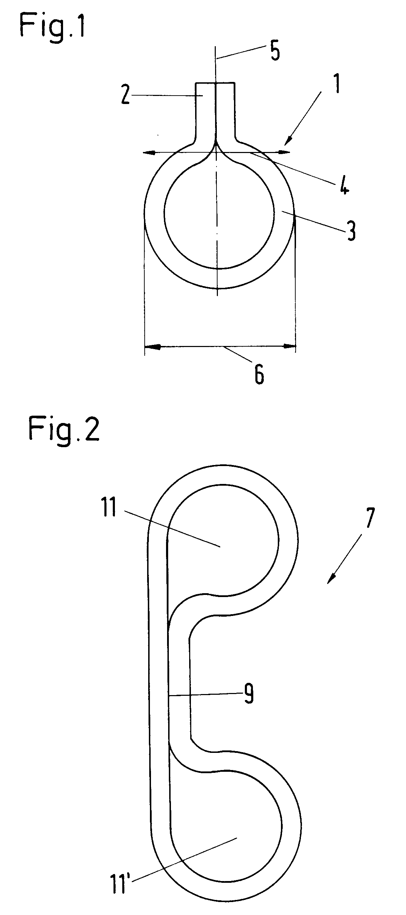

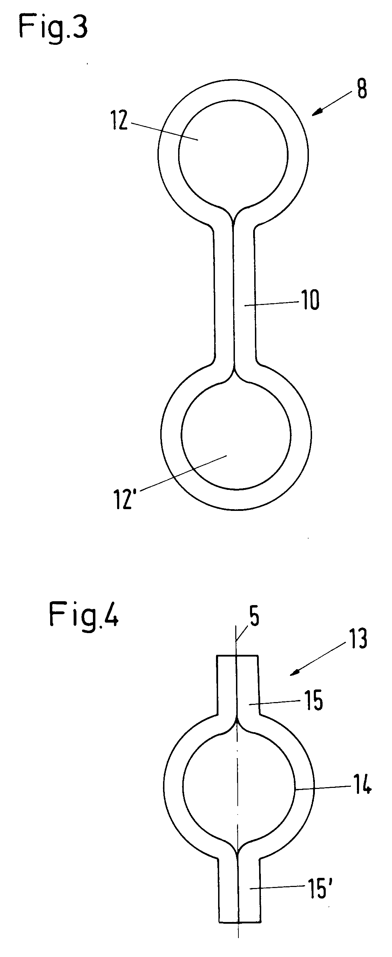

In Figur 1 ist im Querschnitt eine erste einfache Ausführungsform des erfindungsgemäßen Hohlprofiles 1 dargestellt. Das Beispiel weist einen verstärkten doppelwandigen Bereich 2 auf, der zur Befestigung dieses Hohlprofiles 1 an der Innenseite der hier nicht dargestellten Kraftfahrzeugtür dient und einen daran anschließenden etwa rohrförmigen Bereich 3 auf. Dieser Bereich 3 dient zur Aufnahme der Aufprallenergie. Das Profil 1 ist so in der Kraftfahrzeugtür angeordnet, daß die Belastungsrichtung, hier dargestellt durch den Pfeil 4, senkrecht zur Hauptachse 5 des Profiles 1 liegt. Die Bautiefe des Profiles 1 wird durch das äußere Maß 6 des rohrförmigen Bereiches 3 bestimmt. Es ist leicht einzusehen, daß man dieses Maß 6 verringern kann, indem der rohrförmige Bereich 3, vergleichbar wie in Figur 4 dargestellt, mehr oval ist, wobei die lange Achse des Ovals in der Hauptachse 5 liegt.

Die Figuren 2 und 3 zeigen im gleichen Querschnitt wie Fig. 1 zwei weitere Ausführungsformen. In diesen Fällen weist das Hohlprofil 7 bzw. 8 je einen verstärkten Bereich 9 bzw. 10 auf und zwei daran anschließende etwa rohrförmige Bereiche 11,11' bzw. 12,12'. Die Hauptachse dieser Profile 7,8 liegt im Verhältnis zur Belastungrichtung 4 genau wie im Beispiel gemäß Figur 1 dargestellt, so daß sich eine Wiederholung erübrigt. Bei dieser grundsätzlichen Anordnung bedarf es auch keines weiteren Hinweises, daß das Profil 7 beispielsweise spiegelbildlich zur Hauptachse auch anders herum in der Tür angeordnet werden kann.

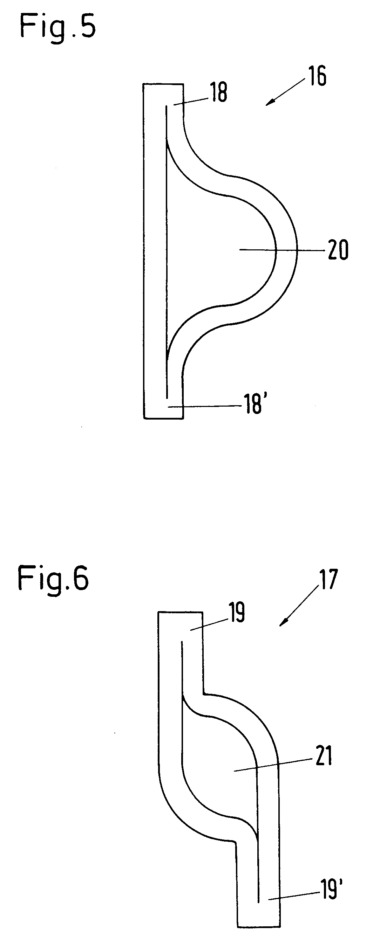

Die Figuren 4 bis 6 zeigen drei weitere Ausführungsbeispiels, bei denen zwei verstärkte Bereiche mit einem rohrförmigen Bereich kombiniert sind. Das in Figur 4 dargestellte Hohlprofil 13 ist symmetrisch ausgebildet, so daß der rohrförmige Bereich 14 und die zwei verstärkten Bereiche 15,15' symmetrisch zur Hauptachse 5 liegen. Im Unterschied dazu liegen bei den in den Figuren 5 und 6 dargestellten Hohlprofilen 16,17 die vertikalen Bereich 18,18' bzw. 19,19' asymmetrisch zum jeweiligen rohrförmigen Bereich 20 bzw. 21.

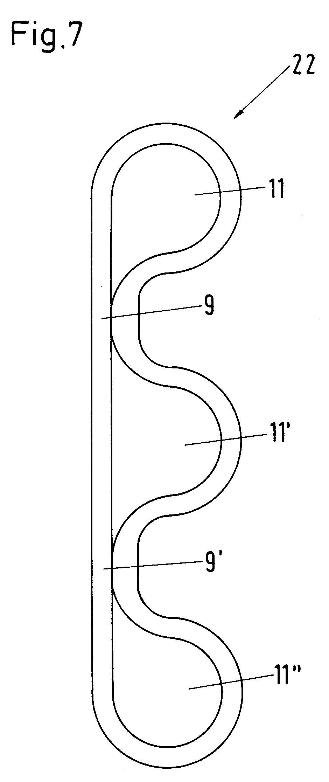

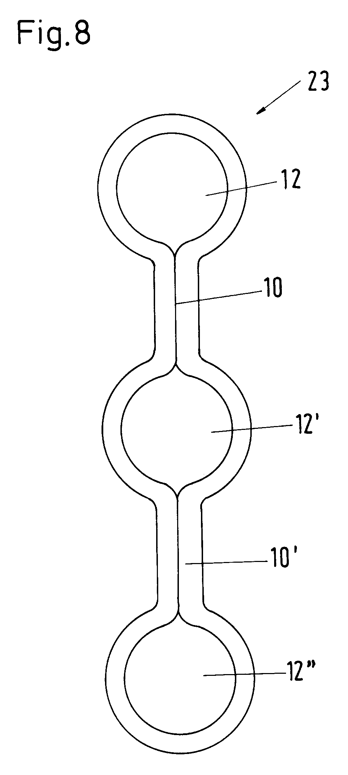

Die in den Figuren 7 und 8 dargestellten Ausführungsbeispiele 22,23 sind direkt ableitbar von denen in den Figuren 2 und 3 dargestellten Beispielen, nur mit dem Unterschied, daß diese zwei verstärkte Bereiche 9,9' bzw. 10,10' und insgesamt drei rohrförmige Bereiche 11,11',11'' bzw. 12,12',12'' aufweisen.

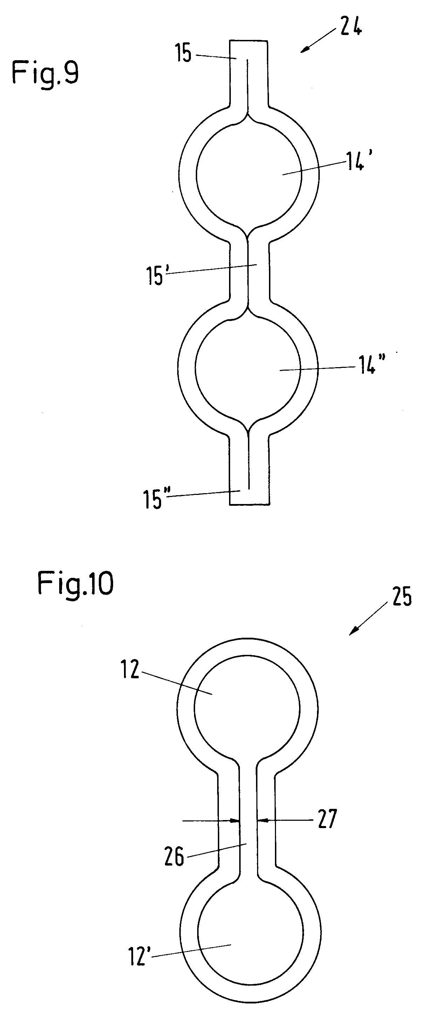

Eine weitere Variante zu Figur 4 ist in Figur 9 dargestellt. Dieses Hohlprofil 24 weist drei verstärkte Bereiche 15,15',15'' und zwei rohrförmige Bereiche 14,14' auf.

Es erübrigt sich darauf hinzuweisen, daß die in den Figuren 5 und 6 dargestellten Ausführungsformen 16,17 in gleicher Weise variiert werden können wie die letztgenannten.

Figur 10 zeigt eine Variante der in Figur 3 dargestellten Ausführungsform. Auch dieses Hohlprofil 25 weist nur einen verstärkten Bereich 26 mit je einem daran anschließenden rohrförmigen Bereich 12,12' auf. Der Unterschied zur Ausführungsform gemäß Figur 3 besteht darin, daß im verstärkten Bereich 26 die Doppelwand nicht unmittelbar aufeinanderliegt, sondern einen geringfügigen Abstand 27 aufweist. Dies hat sich bei der Herstellung eines solchen Profiles als vorteilhaft erwiesen. Dieser Abstand hat außerdem den Vorteil, daß beim Zusammenpressen der beiden etwas auseinanderstehenden Wandbereiche das Hohlprofil 26 unter Vorspannung gebracht wird, was sich günstig auf dessen Umformverhalten beim Aufprall auswirkt. Diese Variante ist für ähnlich ausgelegte Hohlprofile beispielsweise gemäß Figur 2, Figur 7, Figur 8 und Figur 9 ebenso anwendbar.

## Patentansprüche

1. Verstärkungsprofil (1,7,8,13,16,17,22,23,24,25) für die Verstärkung einer Kraftfahrzeugtür, insbesondere einer Personenkraftwagentür, das auf der Innenseite der Fahrzeugtür festlegbar ist und aus mindestens einem Hohlprofilbereich bzw. rohrförmigen Profilbereich (3,11,11',12,12',12'',14,14',14'',20,21,) mit mindestens einem doppelwandig verstärkten Bereich (2,9,10,10',15,15',15'',18,18',19,19',26) besteht, der senkrecht zur Belastungsrichtung (4) liegt und sich über die ganze Länge des Hohlprofils bzw. rohrförmigen Profils erstreckt,
**dadurch gekennzeichnet**,
daß der doppelwandig verstärkte Bereich als Befestigungsbereich vorgesehen ist und der daran anschließende Hohlprofilbereich bzw. rohrförmige Bereich (3,11,11',11'',12,12',12'',14,14',14'',20,21) an beiden Enden offen ist.

2. Verstärkungsprofil nach Anspruch 1,
**dadurch gekennzeichnet**, daß das Verstärkungsprofil (1,7,8,25) nur einen doppelwandig verstärkten
Bereich (2,9,10,26) aufweist.

3. Verstärkungsprofil nach Anspruch 2,
**dadurch gekennzeichnet**, daß der doppelwandig verstärkte Bereich (2) oben oder unten liegt und der
rohrförmige Bereich (3) sich mittelbar daran anschließt.

4. Verstärkungsprofil nach Anspruch 2,
**dadurch gekennzeichnet**,
daß der doppelwandig verstärkte Bereich (9,10,26) in der Mitte des Verstärkungsprofiles (7,8,25) liegt und je ein rohrförmiger Bereich (11,11',12,12') sich nach oder unten anschließt.

5. Verstärkungsprofil nach Anspruch 4,
**dadurch gekennzeichnet**,
daß der doppelwandig verstärkte Bereich (26) einen geringfügigen Abstand (27) voneinander aufweist.

6. Verstärkungsprofil nach Anspruch 1,
**dadurch gekennzeichnet**,
daß das Verstärkungsprofil (13,20,21,22,23) zwei doppelwandig verstärkte Bereiche (15,15',18,18',19,19',9,9'10,10') aufweist.

7. Verstärkungsprofil nach Anspruch 6,
**dadurch gekennzeichnet**,
daß der rohrförmige Bereich (14,20,21) in der Mitte liegt und daran sich die zwei doppelwandig verstärkten Bereiche (15,15',18,18',19,19') anschließen.

8. Verstärkungsprofil nach Anspruch 6,
**dadurch gekennzeichnet,**
daß das Verstärkungsprofil (22,23) drei rohrförmige Bereiche (11,11',11'',12,12',12'') aufweist mit je einem dazwischenliegenden doppelwandig verstärkten Bereich (9,9',10,10').

9. Verstärkungsprofil nach Anspruch 1,
**dadurch gekennzeichnet**,
daß das Verstärkungsprofil (24) drei doppelwandig verstärkte Bereiche (15,15',15'')aufweist.

10. Verstärkungsprofil nach einem der vorhergehenden Ansprüche,
**dadurch gekennzeichnet**,
daß die Kontur des Verstärkungsprofiles (1,7,8,13,16,17,22,23,24,25) in Längsrichtung dem Konturverlauf der Tür angepaßt ist.

## Claims

1. Reinforcement section (1, 7, 8, 13, 16, 17, 22, 23, 24, 25) for reinforcing a motor vehicle door, in particular a passenger vehicle door, which can be fastened to the inside of the vehicle door and consists of at least one hollow sectional region or tubular sectional region (3, 11, 11', 12, 12', 12'', 14, 14', 14'', 20, 21) with at least one region (2, 9, 10, 10', 15, 15', 15'', 18, 18', 19, 19', 26) which is reinforced by a double wall, lies perpendicular to the loading direction (4) and extends over the entire length of the hollow section or tubular section, characterised in that the region which is reinforced by a double wall is provided as an attachment region, and the adjoining hollow sectional region or tubular region (3, 11, 11', 11'', 12, 12', 12'', 14, 14', 14'', 20, 21) is open at both ends.

2. Reinforcement section according to claim 1, characterised in that the reinforcement section (1, 7, 8, 25) only comprises one region (2, 9, 10, 26) which is reinforced by a double wall.

3. Reinforcement section according to claim 2, characterised in that the region (2) which is reinforced by a double wall lies at the top or bottom and is directly adjoined by the tubular region (3).

4. Reinforcement section according to claim 2, characterised in that the region (9, 10, 26) which is reinforced by a double wall lies in the centre of the reinforcement section (7, 8, 25) and is adjoined at the top or bottom by a respective tubular region (11, 11', 12, 12').

5. Reinforcement section according to claim 4, characterised in that the walls in the region (26) which is reinforced by a double wall are at a slight spacing (27) from one another.

6. Reinforcement section according to claim 1, characterised in that the reinforcement section (13, 20, 21, 22, 23) comprises two regions (15, 15', 18, 18', 19, 19', 9, 9', 10, 10') which are reinforced by a double wall.

7. Reinforcement section according to claim 6, characterised in that the tubular region (14, 20, 21) lies in the centre and is adjoined by the two regions (15, 15', 18, 18', 19, 19') which are reinforced by a double wall.

8. Reinforcement section according to claim 6, characterised in that the reinforcement section (22, 23) comprises three tubular regions (11, 11', 11'', 12, 12', 12'') with a respective region (9, 9', 10, 10') which is reinforced by a double wall lying in between.

9. Reinforcement section according to claim 1, characterised in that the reinforcement section (24) comprises three regions (15, 15', 15'') which are reinforced by a double wall.

10. Reinforcement section according to one of the preceding claims, characterised in that the contour of the reinforcement section (1, 7, 8, 13, 16, 17, 22, 23, 24, 25) is adapted to the path of the contour of the door in the longitudinal direction.

## Revendications

1. Profilé de renforcement (1,7,8,13,16,17,22,23,24,25) pour le renforcement d'une porte de véhicule automobile, en particulier d'une porte de voiture particulière, qui peut être fixé sur la face interne de la porte du véhicule et est constitué d'au moins une zone de profilé creux ou une zone de profilé tubulaire (3,11,11',12,12',12'',14,14',14'',20,21) avec au moins une zone renforcée à paroi double (2,9,10,10',15,15',15'',18,18',19,19',26), qui est perpendiculaire à la direction de charge (4) et s'étend sur toute la longueur du profilé creux ou du profilé tubulaire,
caractérisé en ce que la zone renforcée à paroi double est prévue comme zone de fixation et la zone tubulaire ou la zone de profilé creux s'y raccordant (3,11,11',12,12',12'',14,14',14'',20,21) est ouverte aux deux extrémités.

2. Profilé de renforcement selon la revendication 1,
caractérisé en ce que le profilé de renforcement (1,7,8,25) ne présente qu'une zone renforcée à paroi double (2,9,10,26).

3. Profilé de renforcement selon la revendication 2,
caractérisé en ce que la zone renforcée à paroi double (2) se trouve en haut ou en bas et la zone tubulaire (3) s'y raccorde directement.

4. Profilé de renforcement selon la revendication 2,
caractérisé en ce que la zone renforcée à paroi double (9,10,26) se trouve au centre du profilé de renforcement (7,8,25) et une zone tubulaire (11,11',12,12') s'y raccorde, à chaque fois, vers le haut ou vers le bas.

5. Profilé de renforcement selon la revendication 4,
caractérisé en ce que la zone renforcée à paroi double (26) présente un faible écartement (27) entre ses deux parois.

6. Profilé de renforcement selon la revendication 1,
caractérisé en ce que le profilé de renforcement (13,20,21,22,23) présente deux zones renforcées à paroi double (15,15',18,18',19,19',9,9',10,10').

7. Profilé de renforcement selon la revendication 6,
caractérisé en ce que la zone tubulaire (14,20,21) se trouve au centre et les deux zones renforcées à paroi double (15,15',18,18',19,19') s'y raccordent.

8. Profilé de renforcement selon la revendication 6,
caractérisé en ce que le profilé de renforcement (22,23) présente trois zones tubulaires (11,11',11'',12,12',12'') avec, à chaque fois, une zone renforcée à paroi double intermédiaire (9,9',10,10').

9. Profilé de renforcement selon la revendication 1,
caractérisé en ce que le profilé de renforcement (24) présente trois zones renforcées à paroi double (15,15',15'').

10. Profilé de renforcement selon une des revendications précédentes,
caractérisé en ce que le contour du profilé de renforcement (1,7,8,13,16,17,22,23,24,25) est adapté en direction longitudinale au contour de la porte.
